# EUROPÄISCHE PATENTSCHRIFT

(11) **EP 1 089 147 B1**
(45) Veröffentlichungstag und Bekanntmachung des Hinweises auf die Patenterteilung: **26.03.2008**
(21) Anmeldenummer: 00115800.5
(22) Anmeldetag: 22.07.2000
(51) Int. Cl.: G05B 19/042

(54) **Verfahren und Anordnung zur Initialisierung einer Anzahl gleichartiger Steuergeräte**
Method and arrangement for initialising a number of identical control devices
Méthode et dispositif pour initialiser un nombre d'appareils de commande identiques

(30) Priorität: 29.09.1999 DE 19946769
(43) Veröffentlichungstag der Anmeldung: 04.04.2001
(73) Patentinhaber: ROBERT BOSCH GMBH, 70442 Stuttgart (DE)
(72) Erfinder: Weigl, Andreas, 76351 Linkenheim-Hochstetten (DE)

(56) Entgegenhaltungen:
- EP-A- 0 434 986
- DE-A- 19 811 894
- US-A- 4 593 349
- US-A- 5 511 161

## Beschreibung

Die vorliegende Erfindung betrifft ein Verfahren und eine Anordnung zur Initialisierung bzw. Individualisierung einer Anzahl gleichartiger sekundärer Steuergeräte, welche einem primären Steuergerät nachgeschaltet sind.

Bei elektronischen Steuergeräten, beispielsweise Elektroschlössern, ist es aus Gründen der Lagerung und der Logistik zweckmäßig, mehrere Funktionen in einem Baustein vorzusehen, Dies erweist sich insbesondere dann als vorteilhaft, wenn entweder ein Übergang von einer Steuergeräteversion auf eine nächste erfolgen soll und die neue Version gegenüber der Vorgängerversion umfangreiche Änderungen aufweist, zu dieser aber abwärtskompatibel sein muß, oder wenn beispielsweise in einem Fahrzeug mehrere im Hardwareaufbau gleiche elektronische Steuergeräte verbaut werden sollen, deren spezifische Funktionen von außen, ihrer Anwendung entsprechend, festgelegt werden. In jedem Fall muß nach Einbau der Bausteine mit einem einmaligen Verfahren zur Initialisierung dem elektronischen Steuergerät eine spezifische Funktion oder Teilfunktion zugewiesen werden, um sie an den Einsatzort der angesteuerten Funktionsbausteine oder an die Systemvoraussetzungen anzupassen.

Zur Initialisierung eines Steuergerätes sind verschiedene Verfahren bekannt, bei denen durch eine hardwaremäßige Beschaltung eine Auswahl unter verschiedenen, vordefinierten Funktionen getroffen werden kann. So besteht beispielsweise ein Verfahren darin, die Funktionsweise über von außen zugängliche Schalter auszuwählen, was aber den Nachteil hat, daß relativ häufig Fehler bei der Einstellung der Schalter auftreten und die Schalter hohe Kosten verursachen.

Aus der DE 42 03 704 A1 ist ein Verfahren zur Initialisierung mehrerer Steuergeräte, die über einen Bus kommunizieren, bekannt. Dabei werden beispielsweise in einem Fahrzeug mehrere im Hardwareaufbau gleiche elektronische Steuergeräte verbaut, deren spezifische Funktionen erst von außen, ihrer Anwendung entsprechend festgelegt werden. Als nachteilig bei dem dort beschriebenen Verfahren wird angesehen, daß dieses Verfahren einen äußeren Eingriff erfordert, und ein primäres Steuergerät, welches die zu individualisierenden Steuergeräte beaufschlagt, entsprechend von außen aktiviert werden muß.

Aus der DE 37 38 915 A1 ist ein universell einsetzbares Steuergerät für Regeleinrichtungen bekannt. Dabei wird ein Universalsteuergerät eingesetzt, welches erst nach der Montage aufgrund eines äußeren Befehls feststellt, welche Systemauslegung vorliegt, um diese dann abzuspeichern. Dort ist nicht die Problematik angesprochen, mehrere gleichartige Steuergeräte in einem System verschiedenen Positionen und Funktionen durch entsprechende Initialisierung zuzuordnen.

Die EP 0 434 986 A2 zeigt ebenfalls eine Initialisierung von Baugruppen indem diesen Daten und Betriebsparameter, die die Betriebsart der Baugruppe bestimmen. Dabei werden diese an die geographische Adresse der Baugruppe, welche sich aus einer Hardwarekodierung ergibt übermittelt.

Die DE 198 11 894 A1 zeigt dazu bei der Inbetriebnahme eines Bussystems das einzelne Zu- und Abschalten von Spannungsversorgungen einzelner Verbraucher um diese bei der Inbetriebnahme zu testen.

Zusätzlich zu einer Hardwarecodierung in der Elektronik, oder auch in einem Kabelbaum, ist es zur Initialisierung von gleichartigen Steuergeräten eines Steuergerätesystems ebenfalls bekannt, eine Adressvergabe über eine Busverbindung durchzuführen. Hierbei ist stets sicherzustellen, daß nur ein gewünschtes, zu initialisierendes Steuergerät angesprochen wird, und nicht die übrigen, gleichartigen Steuergeräte, welche unter Umständen bereits initialisiert sind.

Aufgabe der Erfindung ist es, eine möglichst einfache Individualisierung gleichartiger sekundärer Steuergeräte, welche einem primären Steuergerät nachgeschaltet sind, sicherzustellen.

Diese Aufgabe wird gelöst durch ein Verfahren mit den Merkmalen des Patentanspruchs 1 sowie eine Anordnung mit den Merkmalen des Patentanspruchs 3.

Erfindungsgemäß ist nun eine Initialisierung gleichartiger sekundärer Steuergeräte, welche einem primären Steuergerät nachgeordnet sind, in einfacher Weise, ohne die Notwendigkeit eines äußeren Eingriffs, möglich. Insbesondere bei einem Einbau eines oder mehrerer neuer Steuergeräte in eine bereits initialisierte Anordnung kann automatisch erkannt werden, daß ein neues, noch nicht initialisiertes Steuergerät im System vorhanden ist. Die neuen Steuergeräte werden erfindungsgemäß in einfacher Weise automatisch ihrem jeweiligen Einbauort zugeordnet und entsprechend codiert, ohne daß manuelle Tätigkeiten notwendig sind. Die erfindungsgemäße Maßnahme, die sekundären Steuergeräte selektiv, d. h. individuell, an eine Versorgungsspannung anzuschließen bzw. sie von dieser Versorgungsspannung zu trennen, erlaubt ein besonders einfaches Ansprechen eines bestimmten Steuergerätes, wobei sichergestellt ist, daß nur ein gewolltes Steuergerät angesprochen wird. Die übrigen sekundären Steuergeräte sind erfindungsgemäß bei Initialisierung eines bestimmten Steuergerätes ausschaltbar, so daß keine Gefahr einer ungewünschten Ansprechung besteht.

Gemäß einer besonders bevorzugten Ausgestaltung des erfindungsgemäßen Verfahrens erfolgt die Feststellung einer bereits durchgeführten oder einer noch nicht durchgeführten Initialisierung mittels Übertragung von Identifiziersignalen von den sekundären Steuergeräten auf das primäre Steuergerät, wobei diese Signale im Falle einer noch nicht erfolgten Initialisierung als neutrales Grundsignal, und andernfalls als individualisiertes Signal ausgebildet sind. Hierbei wird also jedem noch nicht initialisierten sekundären Steuergerät ein neutraler Grundzustand zugewiesen, welcher im Falle einer Initialisierung dem primären Steuergerät mitgeteilt wird. Das primäre Steuergerät ist dann in der Lage festzustellen, welche sekundären Steuergeräte im System vorhanden sind bzw. welche Steuergeräte fehlen, sowie welche Steuergeräte bereits individualisiert sind, bzw. welche nicht.

Zweckmäßigerweise wird im Rahmen der Feststellung der für die jeweiligen sekundären Steuergeräte bereits erfolgten bzw. noch nicht erfolgten Initialisierungen durch das primäre Steuergerät ein Ist-Zustand der Konfiguration der sekundären Steuergeräte mit einem Soll-Zustand verglichen.

Gemäß einer bevorzugten Ausgestaltung der erfindungsgemäßen Anordnung sind zwischen dem primären Steuergerät und den jeweiligen sekundären Steuergeräten Schalter vorgesehen, über welche die Spannungsversorgung der jeweiligen sekundären Steuergeräte, gesteuert durch das primäre Steuergerät, individuell ein- und ausschaltbar ist. Mit dieser Maßnahme ist es in besonders einfacher Weise möglich, ein neues bzw. noch zu initialisierendes Steuergerät zu "isolieren", indem dieses Steuergerät als einziges an der Spannungsversorgung angeschlossen bleibt. Diesem Steuergerät ist dann in einfacher Weise ein Initialisierungssignal zuführbar, ohne die Gefahr, daß auch andere gleichartige sekundäre Steuergeräte angesprochen werden. Insgesamt ist durch diese Maßnahme eine besonders einfache und schnelle Initialisierung einzelner sekundärer Steuergeräte möglich. Es sei angemerkt, daß es auch möglich ist, bei einer Anzahl gleichartiger sekundärer Steuergeräte die Spannungsversorgung aufrechtzuerhalten und gleichzeitig eine Anzahl weiterer sekundärer Steuergeräte abzuschalten. Diese Vorgehensweise ist insbesondere dann praktikabel, wenn die noch eingeschalteten Steuergeräte mit einem identischen Initialisierungssignal beaufschlagt werden sollen und die relative Anordnung bzw. Adressierung dieser sekundären Steuergeräte ohne Bedeutung ist.

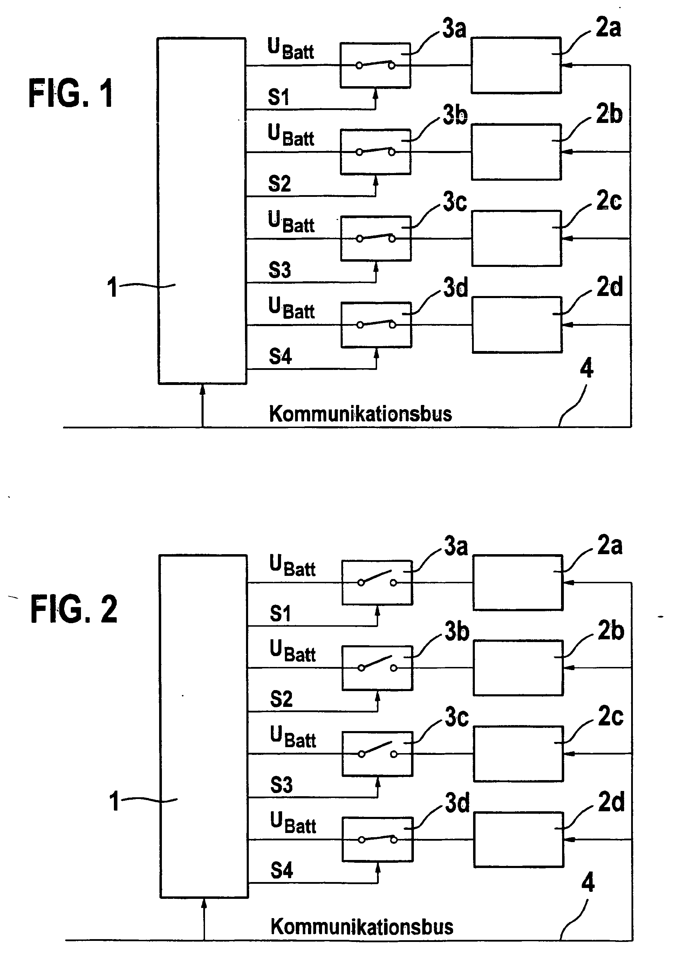

Die Erfindung wird nun anhand der beigefügten Zeichnung weiter erläutert. In dieser zeigt
- Figur 1: eine blockachaltbildartige Ansicht einer ersten bevorzugten Ausführungsform der erfindungsgemäßen Anordnung in einem ersten Schaltzustand,
- Figur 2: die Ausführungsform der Figur 1 in einem zweiten Schaltzustand, und
- Figur 3: ein schematisch vereinfachtes Flußdiagramm zur Veranschaulichung des erfindungsgemäßen Verfahrens.

Die Erfindung wird nun beispielhaft anhand eines Kraftfahrzeuges, welches mit Elektroschlössern ausgerüstet ist, die von einem Lade- und Verteilsteuergerät mit Betriebsspannung versorgt werden, erläutert. Das Lade- und Verteilsteuergerät stellt hierbei ein primäres Steuergerät 1, und die jeweiligen Elektroschlösser sekundäre Steuergeräte 2a, 2b, 2c, 2d dar. Die Spannungsversorgung der sekundären Steuergeräte 2a, 2b, 2c, 2d mit einer Versorgungsspannung U_{Batt} ist über jeweilige Schalter 3a, 3b, 3c, 3d, welche zwischen das primäre Steuergerät 1 und die jeweiligen sekundären Steuergeräte 2a, 2b, 2c, 2d geschaltet sind, ein- bzw. ausschaltbar. Das Ein- bzw. Ausschalten der Schalter 3a, 3b, 3c, 3d bzw. der sekundären Steuergeräte 2a, 2b, 2c, 2d erfolgt mittels jeweiliger Schaltsignale S1, S2, S3, S4, welche von dem primären Steuergerät 1 ausgegeben werden.

Man erkennt ferner, daß sämtliche sekundären Steuergeräte 2a, 2b, 2c, 2d über einen Kommunikationsbus 4 miteinander sowie mit dem primären Steuergerät 1 verbunden sind.

Zur Durchführung einer Initialisierung der jeweiligen sekundären Steuergeräte werden zunächst sämtliche Schalter 3a, 3b, 3c, 3d geschlossen, so daß sich die sekundären Steuergeräte 2a, 2b, 2c, 2d in einem eingeschalteten Zustand befinden. Jedes sekundäre Steuergerät 2a, 2b, 2c, 2d meldet sich auf dem Kommunikationsbus 4 mit einem Identifiziersignal (sog. Identifier), welches von dem primären Steuergerät 1 erfaßt und ausgewertet wird. Jedes noch nicht initialisierte Steuergerät befindet sich in einem sogenannten neutralen Grundzustand, und meldet sich auf dem Kommunikationsbus 4 mit einem Identifiziersignal, welches diesem neutralen Grundzustand entspricht. Bereits initialisierte sekundäre Steuergeräte melden sich auf dem Kommunikationsbus 4 mit einem ihnen individuell zugeordneten Identifiziersignal. Das primäre Steuergerät 1 bestimmt aus den jeweiligen Identifiziersignalen einen Ist-Zustand der Steuergerätekonfiguration und vergleicht diesen mit einem Soll-Zustand. Dabei stellt das sekundäre Steuergerät 1 durch Prüfung der auf dem Kommunikationsbus 4 auftretenden Identifiziersignale fest, welche sekundären Steuergeräte im System vorhanden sind bzw. welche Steuergeräte fehlen, sowie welche sekundären Steuergeräte bereits initialisiert sind bzw. welche nicht.

Wird festgestellt, daß ein neues, noch nicht initialisiertes sekundäres Steuergerät im System vorhanden ist, wird die im folgenden erläuterte Initialisierungsprozedur durchgeführt.

Es sei im folgenden davon ausgegangen, daß das Steuergerät 2d als noch nicht initialisiertes sekundäres Steuergerät erkannt wurde und nun initialisiert werden soll. Zu diesem Zwecke werden die übrigen sekundären Steuergeräte 2a, 2b, 3c durch Öffnen der Dohalter 3a, 3b, 3c von der Spannungsversorgung getrennt, so daß das sekundäre Steuergerät 2d als einziges eingeschaltet bleibt. Anschließend wird ein entsprechendes Initialisierungs- bzw. Individualisierungssignal (sogenannte Konfigurationsbotschaft) mit der Steuergeräteadresse des sekundären Steuergeräts 2d über den Kommunikationsbus 4 an das sekundäre Steuergerät 2d gesendet. Das derart programmierte sekundäre Steuergerät 2d ist dann in der Lage, sich bei einer späteren Initialisierungsprozedur mit einem ihm zugeordneten individuellen Identifiziersignal, und nicht mehr mit dem Identifiziersignal für den neutralen Grundzustand zu melden. Das heißt, bei einer späteren Initialisierungsprozedur kann das primäre Steuergerät 1 sofort erkennen, daß das sekundäre Steuergerät 2d keiner Initialisierung bedarf.

Dieser Vorgang der Konfigurationsprüfung und der anschließenden Initialisierung (individuelle Steuergeräteprogrammierung) wird so oft wiederholt, bis auf dem Kommunikationsbus 4 kein weiteres Identifiziersignal für Steuergeräte im neutralen Grundzustand mehr vorliegt. Ist dies der Fall, ist die Initialisierung sämtlicher sekundärer Steuergeräte abgeschlossen. Durch die dargestellte Vorgehensweise ist insgesamt sichergestellt, daß die verwendeten Initialisierungssignale eindeutig dem jeweiligen sekundären Steuergerät zuordnenbar sind, so daß anschließend eingesetzte individuelle Identifizierungssignale eindeutig dem jeweiligen sekundären Steuergerät zugeordnet sind und nicht mehrfach vergeben bzw. benutzt werden.

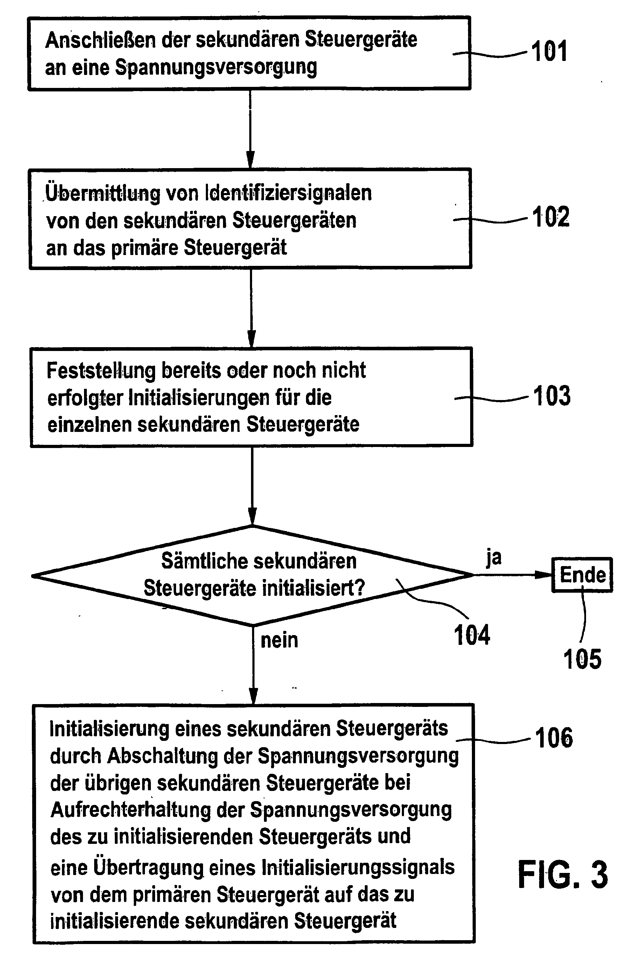

Das erfindungsgemäße Verfahren wird nun anhand des in Figur 3 dargestellten Flußdiagramms weiter erläutert.

In einem Schritt 101 erfolgt ein Anschließen sämtlicher sekundärer Steuergeräte 2a, 2b, 2c, 2d an eine Spannungsversorgung. In einem anschließenden Schritt 102 erfolgt eine Übermittlung von Identifiziersignalen der sekundären Steuergeräte 2a, 2b, 2c, 2d an das primäre Steuergerät 1 (vorzugsweise, wie oben erläutert, mittels des Kommunikationsbusses 4).

In einem anschließenden Schritt 103 erfolgt eine Konfigurationsprüfung der sekundären Steuergeräte 2a, 2b, 2c, 2d durch das primäre Steuergerät 1 über eine Feststellung bereits oder noch nicht durchgeführter Initialisierungen für die jeweiligen sekundären Steuergeräte. In einem anschließenden Schritt 104 wird festgestellt, ob sämtliche sekundären Steuergeräte initialisiert sind oder nicht. Ist dies der Fall, erfolgt eine Verzweigung zu einem Schritt 105, welcher das Ende des Initialisierungsverfahrens darstellt.

Wird jedoch in dem Schritt 104 festgestellt, daß wenigstens ein sekundäres Steuergerät noch nicht initialisiert ist, erfolgt eine Verzweigung zu Schritt 106. In diesem Schritt 106 folgt eine Initialisierung eines ersten zu initialisierenden sekundären Steuergeräts 2d durch Abschaltung der Spannungsversorgung der übrigen sekundären Steuergeräte 2a, 2b, 2c bei Aufrechterhaltung der Spannungsversorgung des zu individualisierenden Steuergeräts 2d und eine Übertragung eines Initialisierungssignals von dem primären Steuergerät 1 auf das zu initialisierende sekundäre Steuergerät 2d. Anschließend erfolgt eine Rückverzweigung zu Schritt 103, wobei in dem anschließenden Schritt 104 wiederum festgestellt wird, ob sämtliche sekundären Steuergeräte initialisiert sind oder nicht. Das dargestellte Verfahren ist durch entsprechende Programmierung des primären Steuergerätes vollautomatisch durchführbar.

Es sei abschließend angemerkt, daß sich das erfindungsgemäße Verfahren an der Vorgehensweise bei der Individualisierung bzw. Initialisierung von ausgetauschten Komponenten, d. h. ausgetauschten sekundären Steuergeräten, nachweisen läßt.

## Patentansprüche

1. Verfahren zur Initialisierung bzw. Individualisierung einer Anzahl gleichartiger sekundärer Steuergeräte, welche jeweils einem primären Steuergerät nachgeschaltet sind, mit folgenden Schritten:
a) Anschließen der sekundären Steuergeräte (2a, 2b, 2c, 2d) an eine von dem primären Steuergerät (1) steuerbare Spannungsversorgung,
b) Übermittlung von Identifiziersignalen von jedem sekundären Steuergerät (2a, 2b, 2c, 2d) an das primäre Steuergerät (1), wobei die Identifiziersignale im Falle einer noch nicht erfolgten Initialisierung einem neutralen Grundzustand, und andernfalls einem individuellen Signal des jeweiligen sekundären Steuergeräts entsprechen,
c) Feststellung einer für die jeweiligen sekundären Steuergeräte (2a, 2b, 2c, 2d) bereits durchgeführten oder noch nicht durchgeführten Initialisierung anhand der Identifiziersignale von den jeweiligen sekundären Steuergeräten (2a, 2b, 2c, 2d),
d) Initialisierung wenigstens eines noch zu initialisierenden sekundären Steuergerätes (2d) durch Aufrechterhaltung der Spannungsversorgung des wenigstens einen zu initialisierenden sekundären Steuergeräts (2d) bei gleichzeitiger Unterbrechung der Spannungsversorgung sämtlicher übriger sekundärer Steuergeräte (2a, 2b, 2c) und Übertragung eines Initialisierungssignals von dem primären Steuergerät (1) an das wenigstens eine zu initialisierende sekundäre Steuergerät (2d), und
e) im Falle weiterer, unterschiedlich zu initialisierender sekundärer Steuergeräte entsprechende Wiederholung des Schrittes d).

2. Verfahren nach Anspruch 1, **dadurch gekennzeichnet, dass** im Rahmen des Schrittes c) gemäß Anspruch 1 durch das primäre Steuergerät 1 ein Ist-Zustand der Konfiguration der sekundären Steuergeräte (2a, 2b, 2c, 2d) mit einem Sollzustand verglichen wird.

3. Anordnung zur Initialisierung einer Anzahl gleichartiger sekundärer Steuergeräte, welche jeweils einem primären Steuergerät nachgeschaltet sind, angepasst zur Durchführung des Verfahrens nach einem der Ansprüche 1 oder 2, **dadurch gekennzeichnet, dass** die sekundären Steuergeräte (2a, 2b, 2c, 2d) über einen Kommunikationsbus (5) mit dem primären Steuergerät (1) verbunden sind, und die sekundären Steuergeräte (2a, 2b, 2c, 2d) individuell, insbesondere gesteuert durch das primäre Steuergerät (1), mit einer Versorgungsspannung beaufschlagbar sind.

4. Anordnung nach Anspruch 3, **gekennzeichnet durch** zwischen dem primären Steuergerät (1) und den jeweiligen sekundären Steuergeräten (2a, 2b, 2c, 2d) vorgesehene Schalter (3a, 3b, 3c, 3d), über welche die Spannungsversorgung der jeweiligen sekundären Steuergeräte (2a, 2b, 2c, 2d), gesteuert **durch** das primäre Steuergerät (1), individuell ein- und ausschaltbar ist.

## Claims

1. Method for initializing or individualizing a number of identical secondary control devices which are in each case connected downstream of a primary control device, comprising the following steps:
a) connecting the secondary control devices (2a, 2b, 2c, 2d) to a voltage supply which can be controlled by the primary control device (1);
b) transmitting identification signals from each secondary control device (2a, 2b, 2c, 2d) to the primary control device (1), with the identification signals corresponding to a neutral basic state if initialization has not yet been performed, and otherwise corresponding to an individual signal of the respective secondary control device;
c) establishing that initialization has already been carried out or has not yet been carried out for the respective secondary control devices (2a, 2b, 2c, 2d) on the basis of the identification signals from the respective secondary control devices (2a, 2b, 2c, 2d);
d) initializing at least one secondary control device (2d) which is still to be initialized by maintaining the voltage supply to the at least one secondary control device (2d) to be initialized while at the same time interrupting the voltage supply to all the other secondary control devices (2a, 2b, 2c) and transmitting an initialization signal from the primary control device (1) to the at least one secondary control device (2d) to be initialized; and
e) correspondingly repeating step d) in the case of other secondary control devices which are to be initialized differently.

2. Method according to Claim 1, **characterized in that** an actual state of the configuration of the secondary control devices (2a, 2b, 2c, 2d) is compared with a desired state by the primary control device (1) within the scope of step c) according to Claim 1.

3. Arrangement for initializing a number of identical secondary control devices which are in each case connected downstream of a primary control device, adapted for carrying out the method according to either of Claims 1 and 2, **characterized in that** the secondary control devices (2a, 2b, 2c, 2d) are connected to the primary control device (1) via a communication bus (5), and a voltage supply can be applied to the secondary control devices (2a, 2b, 2c, 2d) individually, in particular in a manner controlled by the primary control device (1).

4. Arrangement according to Claim 3, **characterized by** switches (3a, 3b, 3c, 3d) which are provided between the primary control device (1) and the respective secondary control devices (2a, 2b, 2c, 2d) and by means of which the voltage supply to the respective secondary control devices (2a, 2b, 2c, 2d) can be individually switched on and off in a manner controlled by the primary control device (1).

## Revendications

1. Procédé pour initialiser ou individualiser un nombre d'appareils de commande secondaires identiques respectivement branchés en aval d'un appareil de commande primaire avec les étapes suivantes consistant à :
a) raccorder les appareils de commande secondaires (2a, 2b, 2c, 2d) à une tension d'alimentation pouvant être commandée par l'appareil de commande (1) primaire,
b) transmettre des signaux d'identification de chaque appareil de commande secondaire (2a, 2b, 2c, 2d) à l'appareil de commande primaire (1), les signaux d'identification correspondant à un état de base neutre dans le cas d'une initialisation n'ayant pas encore eu lieu et dans le cas contraire à un signal individuel de l'appareil de commande secondaire respectif,
c) déterminer une initialisation n'ayant pas encore été réalisée ou ayant déjà été réalisée pour l'appareil de commande secondaire respectif (2a, 2b, 2c, 2d) à l'aide des signaux d'identification des appareils de commande secondaires respectifs (2a, 2b, 2c, 2d).
d) initialiser au moins un appareil de commande secondaire restant à initialiser (2d) par le respect de la tension d'alimentation de l'au moins un appareil de commande secondaire (2d) à initialiser en cas d'interruption simultanée de la tension d'alimentation de tous les appareils de commande secondaires restants (2a, 2b, 2c) et transférer un signal d'initialisation de l'appareil de commande primaire (1) à l'au moins un appareil de commande secondaire (2d) à initialiser, et
e) répéter en conséquence l'étape d) en cas d'autres appareils de commande secondaires à initialiser différemment.

2. Procédé selon la revendication 1,
**caractérisé en ce que**
dans le cadre de l'étape c) suivant la revendication 1 par l'appareil de commande primaire 1 un état réel de la configuration des appareils de commande secondaires (2a, 2b, 2c, 2d) est comparé à un état théorique.

3. Dispositif pour initialiser un nombre d'appareils de commande secondaires identiques commutés respectivement en aval d'un appareil de commande primaire pour réaliser de manière adaptée le procédé selon l'une quelconque des revendications 1 ou 2,
**caractérisé en ce que**
les appareils de commande secondaires (2a, 2b, 2c, 2d) sont reliés à l'appareil de commande primaire (1) via un bus de communication (5), et les appareils de commande secondaires (2a, 2b, 2cd, 2d) peuvent être chargés individuellement par une tension d'alimentation, notamment en étant commandés par l'appareil de commande primaire (1).

4. Dispositif selon la revendication 3,
**caractérisé par**
des commutateurs (3a, 3b, 3c, 3d) prévus entre l'appareil de commande primaire (1) et les appareils de commande secondaires respectifs (2a, 2b, 2c, 2d) et permettant d'activer et de désactiver individuellement la tension d'alimentation des appareils de commande secondaires respectifs (2a, 2b, 2c, 2d) en étant commandés par l'appareil de commande primaire (1).
